# EUROPÄISCHE PATENTSCHRIFT

(11) **EP 3 480 534 B1**
(45) Veröffentlichungstag und Bekanntmachung des Hinweises auf die Patenterteilung: **19.05.2021**
(21) Anmeldenummer: 18203983.4
(22) Anmeldetag: 01.11.2018
(51) Int. Cl.: F25B 47/02, F25D 21/02, F24D 3/18, F24D 19/10

(54) **HEIZUNGSANLAGE UND STEUERVERFAHREN FÜR EINE HEIZUNGSANLAGE**
HEATING SYSTEM AND CONTROL METHOD FOR A HEATING SYSTEM
INSTALLATION DE CHAUFFAGE ET PROCÉDÉ DE COMMANDE POUR UNE INSTALLATION DE CHAUFFAGE

(30) Priorität: 02.11.2017 DE 102017010148
(43) Veröffentlichungstag der Anmeldung: 08.05.2019
(73) Patentinhaber: Stiebel Eltron GmbH & Co. KG, 37603 Holzminden (DE)
(72) Erfinder: Schiefelbein, Kai, 37671 Höxter (DE); Schmidt, Carsten, 37688 Beverungen (DE); Thies, Dominik, 37697 Lauenförde (DE); Herrs, Martin, 37671 Höxter (DE)
(74) Vertreter: Eisenführ Speiser

(56) Entgegenhaltungen:
- EP-A1- 2 505 940
- EP-A1- 2 918 921
- EP-A1- 2 990 737
- EP-A2- 1 837 611
- DE-C1- 3 501 789
- JP-A- 2015 172 452

## Beschreibung

Die vorliegende Erfindung betrifft ein Verfahren zum Betreiben einer Heizungsanlage und eine Heizungsanlage, insbesondere eine Luft/Wasser-Wärmepumpe, die als Heizungswärmepumpe arbeitet.

Heizungswärmepumpen entziehen der Außenluft auf einem niedrigen Temperaturniveau Wärme und geben diese auf einem höheren Temperaturniveau an das Heizungswasser ab. Das Heizungswasser kann beispielsweise auf bis zu 60 °C Vorlauftemperatur erwärmt werden, wobei gerade in Niedrigenergieanwendungen deutlich niedrigere Vorlauftemperaturen ausreichend sind. Über einen luftseitigen Wärmeübertrager (Verdampfer) wird der Außenluft Wärme entzogen. Das Kältemittel verdampft und wird mit einem Verdichter komprimiert. Dafür wird elektrische Energie benötigt. Das Kältemittel ist nun auf einem höheren Temperaturniveau und gibt die Wärme aus der Luft über einen weiteren Wärmeübertrager (Verflüssiger) an das Heizsystem ab. Dabei entspannt das Kältemittel in einem in Strömungsrichtung des Kältemittels dem Verflüssiger nachfolgend geschaltetem Expansionsventil und der Prozess beginnt erneut. Derartige Heizungswärmepumpen können häufig auch die Strömungsverschaltung des Kältemittels durch die Komponenten Verflüssiger und Verdampfer des Kältemittelkreises ändern, der Umgebungsluft dann Wärme aus dem Heizungssystem zuführen und damit als Klimageräte arbeiten.

Infolge dieses auch als "Umkehren des Kältemittelkreises" bezeichneten Umkehrens der Strömungsrichtung durchströmt das Kältemittel im Abtaubetrieb bzw. Kühlbetrieb der Reihenfolge nach, den Verdichter, den Wärmeaustauscher mit der Außenluft, das Expansionsventil, den Wärmeaustauscher mit dem Heiz- bzw. Kühlkreis und erneut den Verdichter. In dem "normalen" bzw. Heizbetrieb durchströmt das Kältemittel entsprechend der Reihenfolge nach, den Verdichter, den Wärmeaustauscher mit dem Heizkreis, das Expansionsventil, den Wärmeaustauscher mit der Außenluft und erneut den Verdichter. Beispielsweise wird ein Vier-Zwei-Wegeventil eingesetzt, um die Umkehr der Strömungsrichtung des Kältemittels zu erreichen, wobei die Strömungsrichtung des Kältemittels durch den Verdichter, bspw. einen Kompressor, beibehalten werden kann.

DE 35 01 789 C1 zeigt ein Verfahren, bei dem ein Abtausignal generiert wird, wenn der Verdampfer vereist ist. Ist der Verdampfer vereist, dann schaltet durch das Abtaubeginnsignal der Schalter die Umwälzpumpe ab, so dass dem Wärmeträgermedium des Wärmepumpenkreises im Verflüssiger keine Wärme entzogen wird. Gleichzeitig öffnet durch das Schließen des Schalters das Schaltventil, so dass Wärmeträgermedium des Wärmepumpenkreises auch durch die Zweigleitung strömt. Das Wärmeträgermedium des Wärmepumpenkreises gelangt also warm zum Verdampfer und taut diesen ab.

Ein Steuergerät für eine Zusatzheizung ist aus EP 2 505 940 A1 bekannt, welches leicht an ein Warmwasser-Heizsystem angeschlossen werden kann, das mit einem einfachen Wasserkreislauf ohne Warmwasserspeicher, in der Lage ist, das Einfrieren des zirkulierenden Wassers zu verhindern, so dass der Einsatz einer Zusatzheizung minimiert wird EP 2 505 940 A1 zeigt ein Verfahren und eine Heizungsanlage gemäß dem Oberbegriff von Anspruch 1 bzw. Anspruch 10.

EP 1 837 611 A2 beschreibt mit einem Abtaudruckwächter im Abtaubetrieb der Wärmepumpe zu detektieren, wann der Verdampfer nicht mehr vereist ist bzw. sich die Vereisung gelöst hat. In diesem Fall steigt der Druck des Kältemittels schnell an, was mit dem Abtaudruckwächter verzögerungsfrei erfasst wird, da der Druck unmittelbar und ohne Verzögerung auf den Sensor wirkt. Zur Beschleunigung des Abtauens kann das Kältemittel zusätzlich im Verflüssiger, Wärme aus dem Heizungskreislauf aufnehmen, die vorher im Heizbetrieb auf sehr effiziente Weise auf die Wärmesenke, in diesem Fall den Heizungskreislauf, übertragen wurde.

Ein Heißwassererzeuger gemäß EP 2 918 921 A1 ist mit einem Temperatursensor zum Erfassen der Temperatur einer Flüssigkeit ausgestattet, die in einen ersten Wärmetauscher oder einen dritten Wärmetauscher in einen Flüssigkeitspfad fließt. Eine Steuervorrichtung stellt eine Anzahl von Umdrehungen des Verdichters so ein, dass eine Zirkulationsmenge eines Kühlmittels, das durch einen Kühlkreislauf zirkuliert, verringert wird, wenn die vom Temperatursensor erfasste Temperatur der Flüssigkeit während der Ausführung des Abtauvorgangs niedriger als die vorbestimmte Temperatur ist.

Bei JP2015172452 ist das zu lösende Problem die Bereitstellung eines Warmwassergenerators, der sich zur Energieeinsparung eignet und gleichzeitig das Einfrieren eines wasserseitigen Kanals eines Heizkörpers verhindert, wenn ein Verdampfer gefroren ist. Gelöst ist dies hier mit einem Heißwassergenerator. Er umfasst einen Kältemittelkreislauf, in dem ein Kompressor, eine Kanalumschalteinrichtung in einer Strömungsrichtung des Kältemittels, einen plattenartigen ersten Wärmetauscher, der einen Wärmeaustausch zwischen dem Kältemittel und einer Flüssigkeit durchführt, einen Kompressor und ein zweiter Wärmetauscher, der einen Wärmeaustausch zwischen dem Kältemittel und Luft implementiert, nacheinander ringförmig durch ein Kältemittelrohr verbunden sind. und einen Flüssigkeitskanal, in dem die Flüssigkeit fließt, wobei ein dritter Wärmetauscher, der einen Wärmeaustausch zwischen dem Kältemittel und der Flüssigkeit durchführt, in dem Kältemittelkreislauf zwischen dem ersten Wärmetauscher und dem Kompressor vorgesehen ist und der Flüssigkeitskanal konfiguriert ist, so dass die Flüssigkeit in der Reihenfolge des dritten Wärmetauschers und des ersten Wärmetauschers fließt. Bei dieser Konfiguration nimmt die Trockenheit des in den ersten Wärmetauscher fließenden Kältemittels zu, um den Temperaturabfall der in dem ersten Wärmetauscher und dem dritten Wärmetauscher fließenden Flüssigkeit zu unterdrücken. Es ist daher möglich, das Einfrieren der Flüssigkeit zu verhindern, die Rückführung der Flüssigkeit zum Kompressor zu unterdrücken und die Energieeinsparung der Vorrichtung zu verbessern.

Ein Warmwasserversorgungssystem ist aus EP 2990737 A1 bekannt, mit einem Kühlmitteltemperatursensor, der zum Zeitpunkt des Abtauvorgangs an einer Kühlmitteleinlassseite des Wasserwärmetauschers angeordnet ist. Eine Wasserversorgungspumpe liefert Wasser zu einem Wasserrohr des Wasserwärmetauschers, wobei eine Steuervorrichtung so konfiguriert ist, dass sie eine Drehzahl pro Zeiteinheit der Wasserversorgungspumpe in Übereinstimmung mit einer durch den Kühlmitteltemperatursensor erfassten Temperatur steuert.

Es ist bekannt, dass sich bei Lufttemperaturen der Außenluft unter ca. + 7 °C die Luftfeuchtigkeit als Reif an den Verdampferlamellen niederschlagen kann. Genauer kann sich Reif dann niederschlagen, wenn die Lamellentemperatur unter 0°C ist und die Taupunkttemperatur der Luft über 0 °C ist und der Taupunkt der vorbeiströmenden Außenluft bei Abkühlung unterschritten wird, die Luft also eine hinreichende relative Feuchte aufweist. Dieser Reifansatz muss regelmäßig abgetaut werden, um die Leistungsfähigkeit der Wärmepumpe bzw. der Heizungsanlage zu erhalten. Bei stärkerem Reifansatz sinkt der lichte Öffnungsquerschnitt der Luftkanäle des Verdampfers, beispielsweise der Kanäle durch die Verdampferlamellen, es kann weniger Luft passieren, weniger Wärme wird übertragen und so sinkt die Leistungszahl und die Leistung der Wärmepumpe.

Zum Abtauen der Verdampferlamellen ist bekannt, die Strömungsrichtung des Kältemittelkreises umzukehren, wobei der luftseitige Wärmeübertrager kurzzeitig die Funktion des Verflüssigers und der heizsystemseitige Wärmeübertrager die Funktion des Verdampfers einnimmt. Die für das Abtauen benötigte Wärme wird dem Heizungskreis entnommen.

Während des Abtauvorgangs wird dem Heizsystem über den Wärmeübertrager Energie mit einer feststehenden, nahezu konstanten Wärmeentzugsleistung entzogen. Moderne Heizungen haben niedrige Vorlauftemperaturen, so dass die in dem Heizungswasser gespeicherte "nutzbare" Wärmemenge insbesondere bei niedrigen Vorlauftemperaturen begrenzt ist. Mit der nutzbaren Wärmemenge oder kurz Wärmemenge ist im Folgenden die Wärmemenge des Heizungswassers gemeint, die dem Wasser mit der Wärmeentzugsleistung des Wärmeaustauschers bzw. Wärmeübertragers entzogen werden kann, bevor das Wasser im Wärmeaustauscher einfrieren kann und dann den Wärmeaustauscher schädigen kann. Je niedriger die Temperatur des Heizungswassers ist, desto schneller gelangt man bei Wärmeentzug an eine Temperaturgrenze, bei welcher das Heizungswasser einfrieren kann. Dies wird als - insbesondere für den Abtauvorgang - nutzbare Wärmemenge bezeichnet. Zusätzlich zu der Temperatur des Heizungswassers ist die nutzbare Wärmemenge, die dem Verflüssiger je Zeiteinheit über das Heizungswasser zugeführt werden kann, von einer Leistung einer Pumpe im Heizungskreis abhängig, d.h. der dem Verflüssiger je Zeiteinheit zuführbaren nutzbaren Wärmemenge sind durch die maximale Durchflussmenge des Heizungswassers Grenzen gesetzt. Wenn die dem Verflüssiger je Zeiteinheit zugeführte nutzbare Wärmemenge geringer als die Wärmeentzugsleistung ist, die sich im Wesentlichen nicht ändert, kann es zu einem Einfrieren des Heizungswassers kommen.

Moderne Heizungen mit kompakter Bauweise oder niedrigen Vorlauftemperaturen laufen demnach Gefahr, dass dem im Wärmeübertrager des Heizsystems (Verflüssiger) befindlichen Heizungswasser durch die Wärmeentzugsleistung so viel Wärme entzogen wird, dass das Heizwasser gefriert und eine Gefahr der Eissprengung des Wärmeaustauschers entsteht.

Es ist somit eine Voraussetzung für einen erfolgreichen Abtaubetrieb, dass dem Verflüssiger, der im Abtaubetrieb als Verdampfer arbeitet, vom Heizungswasser eine hinreichende nutzbare Menge an Wärme zur Verfügung gestellt wird. Hierfür muss auf der einen Seite der Wasservolumenstrom hinreichend groß sein und gleichzeitig die nutzbare Wärmemenge des Heizungswassers ausreichend sein. Anders ausgedrückt, eine je Zeiteinheit durch den Verflüssiger strömende Menge von Heizungswasser muss genügend wie oben definiert nutzbare Wärme enthalten, so dass das Wasser nicht während des Durchströmens gefriert.

Zur Sicherstellung dieser Bedingungen werden beispielsweise Pufferspeicher, die in dem Heizkreis parallel verschaltet werden, und/oder Überströmventile im Heizsystem eingesetzt. Dadurch wird ein Mindestvolumenstrom sichergestellt, wenn Zonen- oder Thermostatventile der Heizkörper des Heizsystems geschlossen sind. Die bekannten Lösungen haben den Nachteil, dass Pufferspeicher Geld kosten, Platz beanspruchen und dass das richtige Einstellen von Überströmventilen komplex ist sowie im Allgemeinen zu Kompromissen entweder in Bezug auf die Effizienz der gesamten Heizungsanlage oder in Bezug auf die Betriebssicherheit, das heißt mit Blick auf die Gefahr der Eissprengung, führt.

Es war somit eine Aufgabe der vorliegenden Erfindung, eine Heizungsanlage und ein Steuerverfahren für eine Heizungsanlage bereitzustellen, die einen sicheren Abtaubetrieb ohne die aus dem Stand der Technik bekannten Nachteile ermöglicht.

Die Aufgabe wird erfindungsgemäß durch ein Verfahren zum Betreiben einer Heizungsanlage, insbesondere einer Luft/Wasser-Wärmepumpe, mit einem Kältemittelkreis und einem Heizungskreis gelöst. Das Verfahren umfasst ein Erfassen eines Parameters, wobei ein Wert des Parameters proportional zu einem Vereisungsgrad eines Kältemittelverdampfers ist, ein Steuern eines Volumenstroms durch den Heizungskreis, wobei der Volumenstrom durch den Heizungskreis erhöht wird, wenn der Wert des Parameters einem Vereisungsgrad entspricht, der einen ersten Schwellwert übersteigt und ein Einleiten eines Abtauvorgangs des Kältemittelverdampfers, insbesondere durch Umkehrung der Durchströmung des Kältemittelkreises, wenn der Wert des Parameters einem Vereisungsgrad entspricht, der einen zweiten Schwellwert übersteigt. Der erste Schwellwert entspricht einem geringeren Vereisungsgrad als der zweite Schwellwert.

Ein Parameter ist eine bestimmte Eigenschaft einer technischen Anlage oder Komponente. Der Kältemittelverdampfer ist vorzugsweise ein Rohr- bzw. Lamellentauscher, bei dem die oben angesprochene Vereisung auftritt. Indem der erste Schwellwert einem geringeren Vereisungsgrad als der zweite Schwellwert entspricht, erfolgt das Steuern des Volumenstroms vor dem Einleiten des Abtauvorgangs, wenn von einer ansteigenden Vereisung ausgegangen wird. Das Steuern des Volumenstroms kann somit vorzugsweise derart erfolgen, dass bereits zu Beginn des Einleitens des Abtauvorgangs ein Volumenstrom mit hinreichender Energie durch den Heizungskreis strömt, so dass ein Gefrieren des Heizwassers insbesondere bei Umkehrung des Kältemittelkreises vermieden wird.

Es sollte beachtet werden, dass das erfindungsgemäße Verfahren vorzugsweise ein Regelungsverfahren ist, das kontinuierlich durchlaufen wird. Der Parameter, dessen Wert proportional zu dem Vereisungsgrad ist, wird in regelmäßigen Abständen oder kontinuierlich erfasst und je nach einem Ergebnis eines Vergleichs des Wertes des Parameters mit dem ersten Schwellwert und/oder dem zweiten Schwellwert werden die jeweiligen Schritte des Steuerns bzw. des Einleitens ausgeführt.

Vorzugsweise erfolgt das Steuern und/oder das Einleiten durch Erzeugen eines Signals, beispielsweise ausgehend von einer Steuereinheit oder Regelungseinheit der Heizungsanlage. Als Signal kann beispielsweise ein potentialfreier Kontakt ein- oder ausgeschaltet werden, ein Spannungsausgang geschaltet werden oder ein Bus-Objekt herausgegeben werden, wobei in anderen Ausführungsformen auch andere Möglichkeiten der Steuerung des Volumenstroms bzw. der Einleitung des Abtauvorgangs möglich sind.

In einer Ausführungsform umfasst das Verfahren weiter ein Erfassen des Volumenstroms durch den Heizungskreis und ein Steuern des Volumenstroms durch den Heizungskreis, so dass der Volumenstrom durch den Heizungskreis einen Mindestwert übersteigt, wenn der Wert des Parameters einem Vereisungsgrad entspricht, der den ersten Schwellwert übersteigt.

Der Volumenstrom kann beispielsweise durch einen Volumenstromsensor in dem Heizungskreis oder auch indirekt durch eine Leistung einer in dem Heizungskreis angeordneten Pumpe erfasst werden. Indem die Steuerung des Volumenstroms derart erfolgt, dass ein Mindestwert überstiegen wird, kann sichergestellt werden, dass die von dem Volumenstrom bereitgestellte Energiemenge hinreichend groß ist, dass es bei einer Umkehrung des Kältemittelkreises nicht zu einer Vereisung des Heizungswassers kommt.

In einer Ausführungsform umfasst das Verfahren weiter ein Steuern des Volumenstroms durch den Heizungskreis nach Abschluss des Abtauvorgangs, insbesondere ein Absenken auf das Niveau vor dem Anheben.

Indem der Volumenstrom derart gesteuert wird, dass er auf das Niveau vor dem Anheben abgesenkt wird, wird eine Effizienz der Heizungsanlage sichergestellt. Vorzugsweise ist der Volumenstrom dann auf einen Wert eingestellt, bei dem sich die optimale Kombination aus Leistung des Kompressors und Aufnahmeleistung der Pumpe einstellt, da dies die Effizienz der Wärmepumpe insgesamt optimiert. Ein noch geringerer Volumenstrom, d.h. eine geringere entsprechende Pumpenaufnahmeleistung, würde zu einer höheren Spreizung der Temperaturdifferenz zwischen Vorlauftemperatur und Rücklauftemperatur des Heizungskreises führen, der im Ergebnis eine erhöhte Kondensationstemperatur und damit eine höhere Aufnahmeleistung des Verdichters mit sich bringt. Vorzugsweise erfolgt das Absenken auf das Niveau vor dem Anheben in einem Zeitraum von 0 Sekunden bis 300 Sekunden nach Beendigung des Abtauvorgangs.

In einer Ausführungsform wird der Mindestwert des Volumenstroms abhängig von der Wärmeentzugsleistung und der nutzbaren Wärmemenge des strömenden Fluids, insbesondere abhängig von der Temperatur, bestimmt.

Der Mindestwert des Volumenstroms kann in der Steuerung der Heizungsanlage in Abhängigkeit von der Heizungsvorlauf- bzw. Rücklauftemperatur einprogrammiert sein oder basierend auf einer gemessenen Temperatur bestimmt werden. Die gemessene Temperatur ist dann vorzugsweise die Heizungsvorlauf- und/oder die Rücklauftemperatur, kann in anderen Ausführungen aber auch eine mit Bezug auf den Kältekreis gemessene Temperatur umfassen.

Während des Abtauvorgangs wird eine Abtauleistung von 1,0 bis 20 kW benötigt. Dieser Wert entspricht in etwa der Wärmeentzugsleistung des Innenwärmetauschers aus dem Heizungswasser, wobei die Wärmeentzugsleistung des Innenwärmetauschers um die im Verdichter in Kompressionsarbeit und Wärme umgewandelte elektrische Energieaufnahme erhöht wird. Der untere Wert des Bereiches der Abtauleistung gilt für kleine, in gut gedämmten Einfamilienhäusern typische Anlagen. Der obere Schwellwert gilt entsprechend für größere Verdampfer, an denen mehr Eis angesetzt wird. Die Wärmeentzugsleistung muss von dem strömenden Fluid als nutzbare Wärmemenge bereitgestellt werden, insbesondere derart bereitgestellt werden, dass die Temperatur des Heizungswassers bei einer Entnahme dieser Wärmeentzugsleistung während der Zeit des Durchlaufs durch den Wärmetauscher nicht unterhalb des Gefrierpunkts absinkt.

Ein Abtauvorgang dauert in der Regel zwischen 3 und 10 Minuten und in Ausnahmefällen bis maximal 15 Minuten. Eine längere Abtauzeit, verbunden mit einer geringeren Abtauleistung, ist vorzugsweise nicht gewünscht, da sich die Dauer des Abtauvorgangs negativ auf den Wirkungsgrad der Heizungsanlage auswirkt.

Für die gesamte Abtauung wird eine Wärmemenge von 0,05 kWh bis 5 kWh benötigt. Diese Menge an Wärmeenergie ist typischerweise als nutzbare Wärmemenge in Heizungssystemen auch ohne Pufferspeicher enthalten. Vorzugsweise wird eine Energie von 0,3 kWh bis 3 kWh benötigt. Indem ein Mindestwert des Volumenstroms festgelegt ist, wird vorzugsweise gewährleistet, dass die Wärmeentzugsleistung, die dem Heizungswasser entzogen wird, nicht zu einer Abkühlung des Heizungswassers in Bereiche führt, bei denen Grenztemperaturen hinsichtlich Vereisung unterschritten werden. Über die Dauer des Abtauvorgangs kann das Heizungssystem auch durch die in dem Heizungssystem gespeicherte hinreichende Energiemenge die gesamte, für die Abtauung benötigte Wärmemenge zur Verfügung stellen. Das Heizungssystem hat demnach eine hinreichend große Speicherkapazität.

In einer Ausführungsform bedingt die Änderung des Vereisungsgrades zwischen dem ersten Schwellwert und dem zweiten Schwellwert eine bestimmte Mindestzeitdauer, wobei der erste Schwellwert und der zweite Schwellwert derart festgelegt sind, dass die bestimmte Mindestzeitdauer länger als die Zeitdauer des Steuerns des Volumenstroms durch den Heizungskreis ist. Die Mindestzeitdauer gewährleistet insbesondere, dass die sich bei einer Sollwertveränderung des Volumenstroms einstellende Verzögerung einer Istwertveränderung des Volumenstroms kompensiert wird.

Die Vereisungsreaktion erfolgt mit einer endlichen Geschwindigkeit, d.h. nicht beliebig spontan bzw. schnell. Der Wert der endlichen Geschwindigkeit hängt von mehreren Faktoren, beispielsweise der Außenlufttemperader, der relativen Außenluftfeuchtigkeit und der Kälteleistung, um nur ein paar zu nennen. Der Wert der endlichen Geschwindigkeit kann sich demnach zwar bis zu einem Faktor 10 unterscheiden, die Geschwindigkeit ist aber nach oben begrenzt, d.h. die Vereisung erfolgt nicht beliebig schnell. Demnach bedingt der Unterschied zwischen dem ersten Schwellwert und dem zweiten Schwellwert, wobei der Wert des Parameters proportional zu dem Vereisungsgrad des Kältemittelverdampfers ist, eine bestimmte Mindestzeitdauer. Indem die Mindestzeitdauer länger als die Zeitdauer des Steuerns des Volumenstroms ist, kann sichergestellt werden, dass der benötigte Volumenstrom vor dem Beginn des Einleitens des Abtauvorgangs, das heißt bevor der Wert des Parameters den zweiten Schwellwert übersteigt, verfügbar ist. Vorzugsweise sind der erste Schwellwert und der zweite Schwellwert derart bestimmt, dass das Steuern in einem Zeitraum von 10 Sekunden bis 300 Sekunden vor Beginn des Einleitens des Abtauvorgangs erfolgt. Die Mindestzeitdauer ist abhängig von den Komponenten des Systems, insbesondere davon, wie schnell sich nach einem Beginn der Ansteuerung der benötigte Volumenstrom einstellt. Aus Gründen der Kosten und des Wirkungsgrades wird gewünscht, eine möglichst geringe Voreinstellzeit festzulegen. Eine zu geringe Voreinstellzeit führt dazu, dass bei Beginn des Abtauvorgangs kein ausreichender Volumenstrom fließt und damit die Gefahr der Eisbildung besteht.

In einer Ausführungsform umfasst das Steuern des Volumenstroms ein Steuern einer Pumpe im Heizungskreis und/oder ein Steuern wenigstens eines Ventils im Heizungskreis.

Durch das Ansteuern der Pumpe, beispielsweise das Erhöhen der Pumpleistung, kann direkt eine Veränderung des Volumenstroms des Heizungswassers bewirkt werden. Alternativ oder zusätzlich kann wenigstens ein Ventil im Heizungskreis gesteuert werden, insbesondere geöffnet werden, um einer Reduktion der Strömung im Heizungskreis entgegenzuwirken. Vorzugsweise umfasst das Steuern ein Einstellen vieler oder auch sämtlicher strömungsreduzierender Teile im Heizungskreis auf einen möglichst geringen Druckverlust. Dadurch kann sichergestellt werden, dass das Heizungswasser, dass sich in sämtlichen Heizungsflächen des Heizungssystems befindet, zum Bereitstellen von Energie zur Verfügung steht und ein ausreichender Volumenstrom mit hinreichender Energiemenge durch den Verflüssiger strömt.

Mit anderen Worten werden in dieser Ausführungsform Zonen- oder Thermostatventile zumindest eines Teils der Heizkörper oder -flächen teilweise oder vollständig geöffnet, zumindest ist insbesondere ein Ventil eines Heizkreises geöffnet, wenn eine Abtauung bevorsteht oder läuft.

Eventuell zusätzlich vorhandene Überströmventile können damit unabhängig von den Anforderungen des Abtaubetriebes eingestellt werden, was eine vereinfachte Einstellung ermöglicht und zu einer Optimierung der Effizienz der Heizungsanlage führt. Dadurch, dass das Heizungswasser im Abtaubetrieb die Heizflächen teilweise oder vollständig durchströmt wird eine hinreichende Energiemenge bereitgestellt, die keinen zusätzlichen Pufferspeicher erfordert, was zu einem einfacheren und kostengünstigeren Gesamtsystem führt. Darüber hinaus kann dadurch, dass das Wasser im Abtaubetrieb die Heizflächen durchströmt, die Enthalpie der beheizten Räume als Abtauenergiereserve genutzt werden.

In einer Ausführungsform umfasst das Ventil Dehnstoff oder einen Motor.

Unterschiedliche Materialien der Ventile verfügen über unterschiedliche Steuerzeiten. Für ein Dehnstoffventil beträgt die Steuerzeitdauer in etwa 3 Minuten. Ein Motorventil hat eine Ansteuerzeit von etwa 30 Sekunden. Obwohl Dehnstoff- oder Motorventile als Beispiele für die erfindungsgemäßen Ventile angeführt sind, können in anderen Ausführungsformen alternativ oder zusätzlich auch andere Ventile zum Einsatz kommen. Auch die angeführten Steuerzeiten sind beispielhaft zu verstehen, sowohl schneller als auch langsamer reagierende Ventile sind vorstellbar. Vorzugsweise wird die durch den Unterschied des ersten Schwellwerts und des zweiten Schwellwerts bedingte Mindestzeitdauer dem verwendeten Ventil entsprechend angepasst.

In einer Ausführungsform umfasst der Parameter einen Druckabfall eines Luftstromes, der über den Kältemittelverdampfer geführt wird. In einer weiteren Ausführungsform umfasst der Parameter alternativ oder zusätzlich eine relative Absenkung einer Verdampfungstemperatur zu einem weiteren Temperaturwert, insbesondere gegenüber einem Temperaturwert der Außenluft. Somit wird vorteilhaft die Differenz zwischen der Verdampfungstemperatur und der Außenlufttemperatur als Parameter verwendet.

Zur Bestimmung des Druckabfalls kann in einem Luftweg ein Luftdifferenzdruck in einer Luft - Strömungsrichtung vor und hinter dem Verdampfer ermittelt werden. Die Außenluft wird dabei mittels eines Ventilators durch den Luftweg des Verdampfers geblasen. Bei einem Reifansatz erhöht sich der Strömungswiderstand der Luft und der Luftdifferenzdruck steigt. Für die Bestimmung der relativen Absenkung der Verdampfungstemperatur können in dem Kältemittelkreis Temperatursensoren vorgesehen sein, oder die Verdampfungstemperatur wird aus dem Verdampfungsdruck und Stoffdaten des Kältemittels errechnet. In anderen Ausführungsformen können auch andere Methoden zur Bestimmung des Druckabfalls und der Verdampfungstemperatur zum Einsatz kommen.

Der Druckabfall im Luftweg über den Kältemittelverdampfer und die relative Absenkung der Verdampfungstemperatur eignen sich alleine oder auch in Kombination, indikativ den Vereisungsgrad zu erkennen und insbesondere proportional zu dem Vereisungsgrad zu sein. In anderen Ausführungsformen sind auch andere Prozessgrößen vorstellbar.

In einer Ausführungsform umfasst das Verfahren ein Einstellen der Werte des Parameters für die Schwellwerte und/oder den Volumenstrom.

Das Einstellen der Werte des Parameters für Schwellwerte und/oder dem Volumenstrom kann beispielsweise durch einen Monteur bei der Inbetriebnahme und/oder Wartung der Heizungsanlage geschehen. Die Parameter für Schwellwerte und/oder dem Volumenstrom können entsprechend den Anforderungen der Heizungsanlage festgelegt werden. In einer anderen Ausführungsform können die Parameter auch bereits bei der Auslieferung fest einprogrammiert sein.

Die Aufgabe wird erfindungsgemäß ferner durch eine Heizungsanlage gelöst, insbesondere eine Luft/Wasser-Wärmepumpe, mit einem Kältemittelkreis und einem Heizungskreis. Die Heizungsanlage umfasst eine Parametererfassungseinheit zum Erfassen eines Parameters, der proportional zu einem Vereisungsgrad eines Kältemittelverdampfers ist, und eine Steuereinheit zum Steuern der Heizungsanlage, wobei die Steuereinheit dazu eingerichtet ist, einen Volumenstrom durch den Heizungskreis in Abhängigkeit von dem Parameter zu steuern, insbesondere dann zu erhöhen, wenn der Parameter der Parametererfassungseinheit einem Vereisungsgrad entspricht, der einen ersten Schwellwert übersteigt. Die Steuereinheit ist dazu eingerichtet, einen Abtauvorgang des Kältemittelverdampfers, insbesondere durch Umkehrung des Kältemittelkreises, einzuleiten, wenn der Parameter einem Vereisungsgrad entspricht, der einen zweiten Schwellwert übersteigt, wobei der erste Schwellwert einem geringeren Vereisungsgrad als der zweite Schwellwert entspricht.

Die mit Bezug auf das erfindungsgemäße Verfahren beschriebenen Ausführungsformen und Vorteile sind analog in vorteilhafter Weise auf die erfindungsgemäße Heizungsanlage übertragbar.

Weitere Vorteile und vorteilhafte Ausgestaltungen werden im Folgenden unter Verwendung eines Ausführungsbeispiels verdeutlicht. Hierfür zeigt:
- Fig. 1: schematisch und exemplarisch eine prinzipielle Schaltanordnung eines Ausführungsbeispiels der erfindungsgemäßen Heizungsanlage und
- Fig. 2: schematisch und exemplarisch ein Ausführungsbeispiel des erfindungsgemäßen Verfahrens zum Betreiben einer Heizungsanlage.

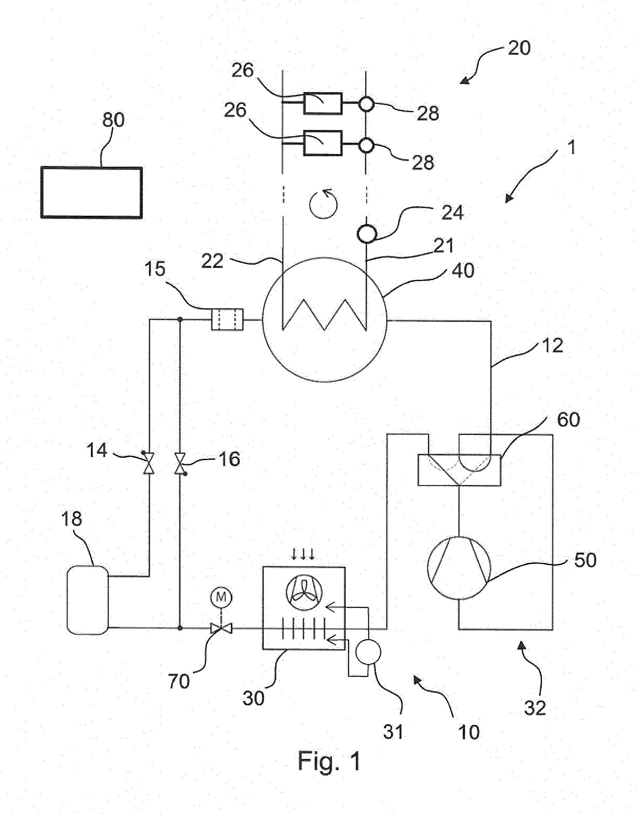

Fig. 1 zeigt schematisch und exemplarisch eine prinzipielle Schaltung einer Heizungsanlage 1. Die Heizungsanlage 1 umfasst einen Kältemittelkreis 10 und einen Heizungskreis 20.

In dem Kältemittelkreis 10 sind ein Verdampfer 30 und ein Verflüssiger 40 angeordnet. Der Verdampfer 30 ist eingerichtet, Umweltwärme auf einem niedrigen Temperaturniveau vorzugsweise aus Umgebungsluft zu gewinnen. Der Verflüssiger 40 gibt Wärme auf einem höheren Niveau an den Heizungskreis 20 ab. In dem Kältemittelkreis 10 sind weiter ein Kompressor 50, ein Vier-Zwei-Wegeventil 60 sowie eine Drossel bzw. ein Expansionsventil 70 angeordnet. Der Verdichter bzw. Kompressor 50 komprimiert das durch eine Kältemittelleitung 12 strömende Kältemittel, wohingegen das Expansionsventil 70 einen Druck des Kältemittels reduziert.

Mittels des Vier-Zwei-Wegeventils 60 ist eine Strömungsrichtung des Kältemittels durch einen Teil des Kältemittelkreises 10 umkehrbar, wobei lediglich die Durchströmungsrichtung durch den Kompressor 50 gleichbleibt. In einer Stellung des Vier-Zwei-Wegeventils komprimiert der Kompressor 50 das Kältemittel direkt in Richtung des Verflüssigers 40. In dieser Stellung wirkt der Kältemittelkreis 10 als eine Wärmepumpe, die Wärme von außen über die Außenluft an den Heizungskreis 20 abgibt. Diese Schaltung bzw. Stellung des Vier-Zwei-Wegeventils ist in Fig. 1 mit gestrichelten Linien innerhalb des Vier-Zwei-Wegeventils 60 gezeichnet.

In einer zweiten Stellung des Vier-Zwei-Wegeventils 60 komprimiert der Kompressor 50 das Kühlmittel direkt auf den Verdampfer 30 zu. Dies entspricht dem in Fig. 1 mit durchgezogenen Linien innerhalb des Vier-Zwei-Wegeventils 60 gezeichneten Umkehrzustand, bei dem Wärme aus dem Heizungskreis 20 temporär an den Verdampfer 30 geliefert wird, um eine Vereisung des Verdampfers 30 abzutauen. Im eigentlichen Sinne wirkt während dieser Zeit somit der Verdampfer 30 als Verflüssiger und der Verflüssiger 40 als Verdampfer.

Darüber hinaus umfasst der Kältemittelkreis 10 zumindest ein Sensormittel 31 oder 32, welches dazu eingerichtet ist, einen Parameter des Kältemittelkreises 10 zu erfassen. Ein derartiger Parameter kann beispielsweise der Kältemitteldruck oder eine Änderung des Kältemitteldrucks, vor allem in einem Niederdruckbereich des Kältemittelkreises sein. An die Parameter ist lediglich die Anforderung gestellt, dass deren Wert proportional zu einem Vereisungsgrad des Kältemittelverdampfers 30 ist, was zumindest für die genannten Beispiele erfüllt ist.

Als Beispiele für die Sensormittel ist in der Fig. 1 ein Luft-Differenzdrucksensor 31 im Luftweg des Verdampfers 30 gezeigt. Der Luft-Differenzdrucksensor 31 bestimmt beispielsweise die Druckdifferenz über die Verdampferlamellen, was schematisch gezeigt ist.

Als weiteres Beispiel ist in der Fig. 1 ein Niederdrucksensor 32 gezeigt, der beispielsweise in der Saugleitung des Kompressors 50 angeordnet ist und zur Erfassung des Niederdruckes geeignet ist. Aus dem erfassten Niederdruck kann dann beispielsweise die Verdampfungstemperatur bestimmt werden.

Ferner kann ein (in der Figur nicht gezeigter) Sensor für die Erfassung der Außenlufttemperatur in der Zuluft des Verdampfers 30 oder irgendwo im Außenbereich der Heizungsanlage 1 angeordnet sein. Anstelle der gezeigten Sensormittel 31, 32 können in anderen Ausführungsbeispielen auch andere Sensormittel und insbesondere auch an einer anderen Stelle, insbesondere im Niederdruckbereich des Kältemittelkreises 10, vorgesehen sein.

Der Kältemittelkreis 10 weist ferner zwei parallele Strömungspfade auf, die jeweils einseitig durchlässige Ventile 14 und 16 aufweisen. Das Ventil 14 ist in einer Strömungsrichtung von einem Filtertrockner 15 zu dem Expansionsventil 70 durchlässig, wohingegen das Ventil 16 in genau der anderen Richtung, nämlich von dem Expansionsventil 70 in Richtung des Filtertrockners 15 durchlässig ist. Hiermit wird erreicht, dass ein dem Ventil 14 nachgeschalteter Kältemittelsammler 18 nur in einer Wärmepumpenrichtung des Kältemittelkreises 10, nicht aber in der in Fig. 1 gezeigten Umkehrrichtung, durchströmt wird. In anderen Ausführungsbeispielen kann der Kältemittelsammler 18 natürlich auch anders angeordnet sein oder weggelassen werden. Der Filtertrockner 15 bindet Feuchtigkeit im Kältemittelkreis 10 und soll feste Partikel herausfiltern.

Der Heizungskreis 20 umfasst in Strömungsrichtung des Heizungswassers einen Heizungsrücklauf 22, den Verflüssiger 40 in dem das Heizungswasser Wärme aus dem Kältemittelkreis 10 aufnimmt, einen Heizungsvorlauf 21 und ein nicht weiter gezeigtes Heizungssystem. Der Verflüssiger 40 arbeitet damit effizient im Gegenstrombetrieb. Das Heizungswasser wird durch den Heizungskreis mittels einer Pumpe gefördert. Es ist zu beachten, dass in dem in Fig. 1 gezeigten Umkehrzustand der Heizungskreis 20 an dem Verflüssiger 40 keine Energie aus dem Kältemittelkreis 10 aufnimmt, sondern im Gegenteil Energie daran abgibt.

Der Heizungskreis 20 weist ferner eine elektrische Pumpe 24 im Heizungsvorlauf 21 auf. Der Heizungskreis 20 umfasst mehrere Heizflächen 26, beispielsweise Fußbodenheizungen in Räumen eines Gebäudes oder auch klassische an der Wand montierbare Heizungskörper. Die jeweiligen Heizflächen 26 sind parallel in dem Heizungskreis 20 geschaltet. Ein Durchfluss durch die jeweiligen Heizflächen 26 wird über ein zugehöriges Ventil 28 gesteuert. Vorzugsweise weist auch der Heizungskreis 20 ein Sensormittel (nicht gezeigt) auf, das zur Bestimmung wenigstens einer Temperatur und/oder eines Volumenstroms des durch den Heizungskreis 20 strömenden Heizungswassers eingerichtet ist.

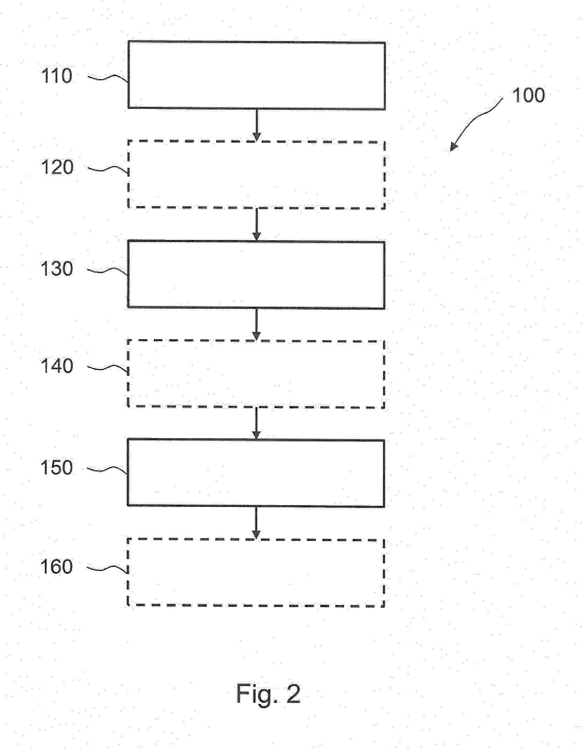

Fig. 1 zeigt ferner eine Steuerung 80, die dazu eingerichtet ist, das Betreiben der Heizungsanlage 1 zu steuern. Die Steuerung 80 ist insbesondere eingerichtet, die Heizungsanlage 1 nach dem erfindungsgemäßen Verfahren zum Betreiben einer Heizungsanlage, das mit Verweis auf Figur 2 beschrieben wird, zu steuern. Dazu ist die Steuerung 80 eingerichtet, einen Parameter von dem Sensormittel (nicht gezeigt) des Heizungskreises 20 zu erlangen, einen Abtauvorgang des Verdampfers 30, wie er in Fig. 1 gezeigt ist, auszulösen und einen Volumenstrom durch den Heizungskreis 20, insbesondere durch Ansteuern wenigstens eines aus der Pumpe 24 und dem Ventil 28, zu steuern.

Fig. 2 zeigt schematisch und exemplarisch ein Flussdiagramm des erfindungsgemäßen Verfahrens 100 zum Betreiben einer Heizungsanlage 1, wie beispielsweise der in Fig. 1 gezeigten Heizungsanlage 1. Das Verfahren 100 ermöglicht den Kältemittelverdampfer 30 abzutauen, ohne dass es zu Eissprengung im Bereich des Verflüssigers 40 kommt.

In Schritt 110 wird ein Parameter, der proportional zu einem Vereisungsgrad des Kältemittelverdampfers 30 ist, erfasst. Der Parameter ist beispielsweise, ohne darauf beschränkt zu sein, ein Druckabfall über den Kältemittelverdampfer 30 und/oder eine relative Absenkung der Verdampfungstemperatur.

In einem optionalen Schritt 120 wird der Volumenstrom durch den Heizungskreis 20 erfasst. Der Volumenstrom durch den Heizungskreis 20 kann beispielsweise durch eine Leistung der Pumpe 24 variiert oder eingestellt werden, wobei der Volumenstrom durch einen optionalen, in Fig. 1 nicht gezeigten, Volumenstromsensor gemessen werden kann.

In einem Schritt 130 wird der Volumenstrom durch den Heizungskreis 20 gesteuert, insbesondere erhöht, wenn der in Schritt 110 erfasste Parameter einem Vereisungsgrad des Kältemittelverdampfers 30 entspricht, der einen ersten Schwellwert übersteigt.

In einem optionalen Schritt 140 wird der Volumenstrom durch den Heizungskreis 20 derart gesteuert, dass der Volumenstrom durch den Heizungskreis 20 einen Mindestwert übersteigt, wenn der in Schritt 110 erfasste Parameter einem Vereisungsgrad entspricht, der den ersten Schwellwert übersteigt.

In einem Schritt 150 wird der Abtauvorgang des Kältemittelverdampfers 30 insbesondere durch eine Umkehrung des Kältemittelkreises 10 eingeleitet. Das Einleiten in Schritt 150 erfolgt, wenn der Parameter einem Vereisungsgrad des Kältemittelverdampfers 30 entspricht, der einen zweiten Schwellwert übersteigt. Der erste Schwellwert entspricht einem geringeren Vereisungsgrad als der zweite Schwellwert, so dass das Steuern in Schritt 130 vor dem Einleiten in Schritt 150 erfolgt.

In einem optionalen Schritt 160 wird der Volumenstrom durch den Heizungskreis 20 nach Abschluss des Abtauvorgangs des Kältemittelverdampfers 30 abgesenkt. Vorzugsweise wird der Volumenstrom auf das Niveau abgesenkt, der vor dem Steuern in Schritt 130 oder 140 vorhanden war.

Obwohl die Reihenfolge der Schritte in Fig. 2 angedeutet ist, muss verstanden werden, dass die einzelnen Verfahrensschritte als Regelungsinstruktionen implementiert sind, das heißt, im Wesentlichen gleichzeitig und ständig ausgeführt werden und jeweils nur in Abhängigkeit eines bestimmten Zustandes, beispielsweise in Abhängigkeit des Parameters, der proportional zu dem Vereisungsgrad ist, durchlaufen werden.

Der Parameter umfasst vorteilhaft einen Druckabfall einer Luftströmung, insbesondere durch einen Luftweg des Kältemittelverdampfers 30 und/oder eine relative Absenkung der Verdampfungstemperatur.

Obwohl die Ausführungsformen und Vorteile in Bezug auf eine Luft/Wasser-Wärmepumpe ausgeführt wurden, so können diese in anderen Ausführungsformen auch auf andere Heizungsanlagen vorteilhaft angewandt werden.

## Patentansprüche

1. Verfahren (100) zum Betreiben einer Heizungsanlage (1), insbesondere einer Luft/Wasser-Wärmepumpe, mit einem Kältemittelkreis (10) Z feinem Kältemittelverdampfer und einem Heizungskreis (20), umfassend den Schritt
- Erfassen (110) eines Wertes eines Parameters, der proportional zu einem Vereisungsgrad des Kältemittelverdampfers (30) ist **kennzeichnet durch** weiters umfassend die Schritte
- Steuern (130) eines Volumenstroms **durch** den Heizungskreis (20), wobei der Volumenstrom **durch** den Heizungskreis erhöht wird, wenn der Wert des Parameters einem Vereisungsgrad entspricht, der einen ersten Schwellwert übersteigt,
- Einleiten (150) eines Abtauvorgangs des Kältemittelverdampfers (30), insbesondere **durch** Umkehrung des Kältemittelkreises (10), wenn der Wert des Parameters einem Vereisungsgrad entspricht, der einen zweiten Schwellwert übersteigt,
wobei der erste Schwellwert einem geringeren Vereisungsgrad als der zweite Schwellwert entspricht.

2. Verfahren (100) nach Anspruch 1, weiter umfassend:
- Erfassen (120) des Volumenstroms durch den Heizungskreis (20), und
- Steuern (140) des Volumenstroms durch den Heizungskreis (20), so dass der Volumenstrom durch den Heizungskreis (20) einen Mindestwert übersteigt, wenn der Wert des Parameters einem Vereisungsgrad entspricht, der den ersten Schwellwert übersteigt.

3. Verfahren (100) nach Anspruch 1 oder 2, weiter umfassend:
- Steuern (160) des Volumenstroms durch den Heizungskreis (20) nach Abschluss des Abtauvorgangs, insbesondere Absenken auf das Niveau vor dem Anheben.

4. Verfahren (100) nach Anspruch 2 oder 3, wobei der Mindestwert des Volumenstroms abhängig von der Wärmeentzugsleistung und der nutzbaren Wärmemenge des strömenden Fluids, insbesondere abhängig von der Temperatur, bestimmt wird, wobei die Wärmeentzugsleistung von dem strömenden Fluid als nutzbare Wärmemenge bereitgestellt wird, so dass die Temperatur des Heizungswassers bei einer Entnahme dieser Wärmeentzugsleistung während der Zeit des Durchlaufs durch den Wärmetauscher nicht unterhalb des Gefrierpunkts absinkt.

5. Verfahren (100) nach einem der vorstehenden Ansprüche, wobei die Änderung des Vereisungsgrades zwischen dem ersten Schwellwert und dem zweiten Schwellwert eine bestimmte Mindestzeitdauer bedingt,
wobei der erste Schwellwert und der zweite Schwellwert derart festgelegt sind, dass die bestimmte Mindestzeitdauer länger als die Zeitdauer des Steuerns des Volumenstroms durch den Heizungskreis (20) ist, wobei durch die Mindestzeitdauer gewährleistet ist, dass die sich bei einer Sollwertveränderung des Volumenstroms einstellende Verzögerung einer Istwertveränderung des Volumenstroms kompensiert wird.

6. Verfahren (100) nach einem der vorstehenden Ansprüche, wobei das Steuern des Volumenstroms ein Steuern einer Pumpe (24) im Heizungskreis (20) und/oder ein Steuern wenigstens eines Ventils (28) im Heizungskreis (20) umfasst.

7. Verfahren (100) nach Anspruch 6, wobei das Ventil (28) Dehnstoff oder einen Motor umfasst.

8. Verfahren (100) nach einem der vorstehenden Ansprüche, wobei der Parameter einen Druckabfall einer Luftströmung durch den Kältemittelverdampfer (30) und/oder eine relative Absenkung einer Verdampfungstemperatur gegenüber einem weiteren Temperaturwert, insbesondere einer Außenlufttemperatur, umfasst.

9. Verfahren (100) nach einem der vorstehenden Ansprüche, wobei das Verfahren weiter ein Einstellen der Werte des Parameters für Schwellwerte und/oder Volumenstrom umfasst.

10. Heizungsanlage (1), insbesondere Luft/Wasser-Wärmepumpe, mit einem Kältemittelkreis (10), einem Kältemittelverdampfer (30) und einem Heizungskreis (20), umfassend eine Parametererfassungseinheit zum Erfassen eines Wertes eines Parameters, der proportional zu einem Vereisungsgrad Kältemittelverdampfers (30) ist,
eine Steuereinheit (80) zum Steuern der Heizungsanlage (1), **dadurch gekennzeichnet, dass** die Steuereinheit (80) dazu eingerichtet ist, einen Volumenstrom durch den Heizungskreis (20) in Abhängigkeit von dem Wert des Parameters zu erhöhen wenn der Wert des Parameters der Parametererfassungseinheit einem Vereisungsgrad entspricht, der einen ersten Schwellwert übersteigt, wobei
die Steuereinheit (80) dazu eingerichtet ist, einen Abtauvorgang des Kältemittelverdampfers (30), insbesondere durch Umkehrung des Kältemittelkreises (10), einzuleiten, wenn der Wert des Parameters einem Vereisungsgrad entspricht, der einen zweiten Schwellwert übersteigt,
wobei der erste Schwellwert einem geringeren Vereisungsgrad als der zweite Schwellwert entspricht.

## Claims

1. A method (100) of operating a heating system (1), in particular an air/water heat pump, comprising a refrigerant circuit (10), a refrigerant evaporator, and a heating circuit (20), including the step of:
- acquiring (110) a value of a parameter which is proportional to a degree of icing of the refrigerant evaporator (30),
**characterised by** further including the steps of:
- controlling (130) a flow rate through the heating circuit (20), wherein the flow rate through the heating circuit is increased when the value of the parameter corresponds to a degree of icing exceeding a first threshold value,
- inducing (150) a de-icing operation of the refrigerant evaporator (30), in particular through reversal of the refrigerant circuit (10), when the value of the parameter corresponds to a degree of icing exceeding a second threshold value,
wherein the first threshold value corresponds to a lower degree of icing than the second threshold value.

2. The method (100) according to claim 1, further including:
- acquiring (120) the flow rate through the heating circuit (20), and
- controlling (140) the flow rate through the heating circuit (20) such that the flow rate through the heating circuit (20) exceeds a minimum value when the value of the parameter corresponds to a degree of icing exceeding the first threshold value.

3. The method (100) according to claim 1 or 2, further including:
- controlling (160) the flow rate through the heating circuit (20) after completion of the de-icing operation, in particular lowering to the level prior to raising.

4. The method (100) according to claim 2 or 3, wherein the minimum value of the flow rate is determined depending on the heat extraction capacity and the usable quantity of heat of the flowing fluid, in particular depending on the temperature, wherein the heat extraction capacity of the flowing fluid is provided as a usable quantity of heat, so that the temperature of the heating water on removal of this heat extraction capacity during the time of passing through the heat exchanger does not fall below the freezing point.

5. The method (100) according to one of the preceding claims, wherein the change in the degree of icing between the first threshold value and the second threshold value requires a pre-determined minimum period of time,
wherein the first threshold value and the second threshold value are set such that the pre-determined minimum period of time is longer than the period of time of controlling the flow rate through the heating circuit (20), wherein the minimum period of time ensures that the delay of any change in the actual value of the flow rate arising upon a change in the set value of the flow rate is compensated.

6. The method (100) according to one of the preceding claims, wherein controlling the flow rate includes controlling a pump (24) in the heating circuit (20) and/or controlling at least one valve (28) in the heating circuit (20).

7. The method (100) according to claim 6, wherein the valve (28) includes expansion material or a motor.

8. The method (100) according to one of the preceding claims, wherein the parameter includes a pressure drop of an air flow through the refrigerant evaporator (30) and/or a relative lowering of an evaporation temperature with respect to a further temperature value, in particular an outside air temperature.

9. The method (100) according to one of the preceding claims, wherein the method further includes adjusting the values of the parameter for threshold values and/or the flow rate.

10. A heating system (1), in particular an air/water heat pump comprising a refrigerant circuit (10), a refrigerant evaporator (30), and a heating circuit (20), including
a parameter acquisition unit for acquiring a value of a parameter which is proportional to a degree of icing of the refrigerant evaporator (30),
a control unit (80) for controlling the heating system (1),
**characterised in that** the control unit (80) is configured to increase a flow rate through the heating circuit (20) in dependence of the value of the parameter when the value of the parameter of the parameter acquisition unit corresponds to a degree of icing exceeding a first threshold value, wherein
the control unit (80) is configured to induce a de-icing operation of the refrigerant evaporator (30), in particular through reversal of the refrigerant circuit (10), when the value of the parameter corresponds to a degree of icing exceeding a second threshold value,
wherein the first threshold value corresponds to a lower degree of icing than the second threshold value.

## Revendications

1. Procédé (100) d'exploitation d'une installation de chauffage (1), notamment une pompe à chaleur air/eau, comportant un circuit frigorifique (10), un évaporateur de fluide frigorigène et un circuit de chauffage (20), comprenant l'étape consistant à :
- saisir (110) une valeur d'un paramètre qui est proportionnelle à un degré de givrage de l'évaporateur de fluide frigorigène (30),
**caractérisé en ce qu'**il comprend aussi les étapes consistant à :
- commander (130) un débit volumique dans le circuit de chauffage (20), ledit débit volumique dans le circuit de chauffage étant augmenté lorsque la valeur dudit paramètre correspond à un degré de givrage qui excède un premier seuil,
- engager (150) une opération de dégivrage dudit évaporateur de fluide frigorigène (30), notamment par inversion du circuit frigorifique (10), lorsque la valeur dudit paramètre correspond à un degré de givrage qui excède un deuxième seuil,
le premier seuil correspondant à un degré de givrage inférieur à celui du deuxième seuil.

2. Procédé (100) selon la revendication 1, comprenant en outre les étapes consistant à :
- saisir (120) le débit volumique dans le circuit de chauffage (20), et
- commander (140) ledit débit volumique dans le circuit de chauffage (20) de manière que ledit débit volumique dans le circuit de chauffage (20) excède une valeur minimale, lorsque la valeur du paramètre correspond à un degré de givrage qui excède le premier seuil.

3. Procédé (100) selon la revendication 1 ou 2, comprenant en outre l'étape consistant à :
- commander (160) le débit volumique dans le circuit de chauffage (20) après la fin de l'opération de dégivrage, notamment le réduire au niveau d'avant son augmentation.

4. Procédé (100) selon la revendication 2 ou 3, dans lequel la valeur minimale du débit volumique est déterminée en fonction de la puissance d'extraction de chaleur et de la quantité de chaleur utilisable du fluide circulant, notamment en fonction de la température, ladite puissance d'extraction de chaleur du fluide circulant étant mise à disposition en tant que quantité de chaleur utilisable, de manière que la température de l'eau de chauffage ne tombe pas en dessous du point de congélation lors d'une absorption de cette puissance d'extraction de chaleur pendant la circulation dans l'échangeur de chaleur.

5. Procédé (100) selon l'une des revendications précédentes, dans lequel le passage du degré de givrage du premier seuil au deuxième seuil prend un certain temps minimal,
le premier seuil et le deuxième seuil étant fixés de sorte que ledit certain temps minimal soit plus long que le temps pris par la commande du débit volumique dans le circuit de chauffage (20), ledit temps minimal garantissant une compensation du délai entre une modification de la valeur de consigne du débit volumique et la modification de la valeur réelle du débit volumique.

6. Procédé (100) selon l'une des revendications précédentes, dans lequel la commande du débit volumique comprend la commande d'une pompe (24) située dans le circuit de chauffage (20) et/ou la commande d'au moins une vanne (28) située dans le circuit de chauffage (20).

7. Procédé (100) selon la revendication 6, dans lequel la vanne (28) comporte un matériau dilatable ou un moteur.

8. Procédé (100) selon l'une des revendications précédentes, dans lequel le paramètre comprend une chute de pression d'un courant d'air dans l'évaporateur de fluide frigorigène (30) et/ou une baisse relative de la température de vaporisation par rapport à une autre valeur de température, notamment à une température extérieure.

9. Procédé (100) selon l'une des revendications précédentes, comprenant en outre un réglage des valeurs du paramètre pour les seuils et/ou le débit volumique.

10. Installation de chauffage (1), notamment pompe à chaleur air/eau, comportant un circuit frigorifique (10), un évaporateur de fluide frigorigène (30) et un circuit de chauffage (20), comprenant :
une unité de saisie de paramètre destinée à saisir la valeur d'un paramètre qui est proportionnelle à un degré de givrage de l'évaporateur de fluide frigorigène (30),
une unité de commande (80) destinée à commander l'installation de chauffage (1),
**caractérisée en ce que** ladite unité de commande (80) est conçue pour augmenter le débit volumique dans le circuit de chauffage (20) en fonction de la valeur du paramètre lorsque la valeur du paramètre de ladite unité de saisie de paramètre correspond à un degré de givrage qui excède un premier seuil,
l'unité de commande (80) étant conçue pour engager une opération de dégivrage dudit évaporateur de fluide frigorigène (30), notamment par inversion du circuit frigorifique (10), lorsque la valeur dudit paramètre correspond à un degré de givrage qui excède un deuxième seuil,
le premier seuil correspondant à un degré de givrage inférieur à celui du deuxième seuil.
